# EUROPEAN PATENT APPLICATION

(11) **EP 0 933 692 A2**
(43) Date of publication of application: **04.08.1999**
(21) Application number: 99300679.0
(22) Date of filing: 29.01.1999
(51) Int. Cl.: G06F 3/12

(54) **Previewing printer output**

(30) Priority: 31.01.1998 SG 9800221
(71) Applicant: Hewlett-Packard Company, Palo Alto, CA 94303 (US)
(72) Inventor: Seet, Chim Len, Johann, Singapore 679038 (SG); Sim, Lay Geok, Singapore 730402 (SG); Eng, Yaag Whuang, Singapore 141080 (SG); Lye, Hou Keet, Singapore 610160 (SG)
(74) Representative: Powell, Stephen David

(57) **Abstract**

In a print preview system comprising a printer driver (22) and a computer display (23) , an application program (24) capable of generating a print job first makes printing calls to the Windows operating system (OS) of the computer. The printing calls made by the application program subsequently results in the print job being sent to the Windows OS. The Windows OS then passes the printing job to the printer driver for processing, including processing it according to a previously selected special printer feature. After processing, a printer driver preview user interface (U) is presented on the display. Such a printer driver preview UI provides a means to preview the print job after the printer driver has processed it according to a previously selected printer feature. This preview represents the desired printout at the printer. This print preview means differs from an application program preview UI typically provided by the application program. The application program preview UI provides a preview of the print job before the printer driver has processed it.

## Description

The invention relates generally to computing systems provided with printing functionalities. In particular, it relates to a system and a method for providing a preview of a printout produced by a printer device connected to a host computer.

The ubiquitous printer is a device generally connected to a computing system for producing hardcopies, or printouts, of documents. These documents are typically generated using common application programs like word processors, spreadsheets, or drawing tools that would usually be installed in the computing system. To afford the computing system with printing functionality, it additionally needs to be installed with a printer driver corresponding to the connected printer. A printer driver is a special purpose application program that typically processes printer-independent printing information, though specific to the operating system of the computing system, to printer-dependent printing information specific to and usable only by the corresponding printer to produce printouts. A user who wishes to make printouts of a chosen document from an application program first activates a print function usually inherent to the application program. The application program then sends the printer-independent printing information of the chosen document to the operating system. The printer driver subsequently receives the printer-independent printing information from the operating system, and processes it so that the printer can use it for producing a printout of the chosen document.

Due to rapid and progressive development of printer technology over the recent years, many types of printers have appeared at the marketplace. Of the numerous types of printers commercially available now, inkjet and low-cost laser printers have become popular with many cost-conscious computer system owners. These computer system owners, however, have also evolved into sophisticated users. Hence, for a manufacturer of such types of printers to further distance itself from the competition in the crowded marketplace, it would need to additionally implement creative technologies and new useful printer features in each new type of printer.

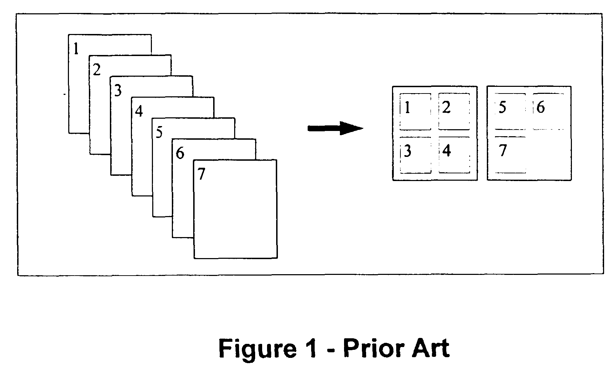

One such inkjet printer offering creative technologies and useful printer features is the HP Deskjet 1100C Printer from the Hewlett-Packard Company. The 1100C Printer is provided with, among other special printer features, a Handout feature. A user who chooses such a feature is given an opportunity to reduce the size of two, four or eight pages of a document and print these pages onto a single sheet of printout. The effect of such a feature can be seen in Figure 1, where seven pages of a document are printed using the Handout feature to produce two sheets of printout.

Such printer features are optimally implemented in a printer driver, where these features are accessible to all the application programs in a computer system through the operating system. Moreover, with an expanding knowledge base for software programming and the availability of low-cost software production, printer drivers have now arrived at a state whereby users can opt for one of but many printer features available in each printer driver.

While such multi-feature printers are widely available and used, they suffer from disadvantages. Since users now have many ways to print a document using these multi-feature printers, a need then arises for these users to be able to visually check the effect of the chosen printer feature on the desired printout of the document before they proceed to make the actual printout. Although many application programs that run on the popular Windows operating system provide users with print preview means on the screen of the computing system, there are still two problems. Firstly, these print preview means are not provided by the Windows operating system, but implemented as part of the printing functionality provided by each application program. Furthermore, different application programs implement the print preview means differently. Therefore, the users will have to learn, and be familiar with, different ways of accessing the print preview means for the different application programs. Secondly, and more importantly being a disadvantage addressed by the present invention, the multi-features provided by printer drivers are typically transparent to the application programs and the Windows operating system. Thus, the actual printout will look different from the preview which the application program preview means may provide, when a special printer feature has been chosen.

Therefore, various solutions to these problems have been proposed and made available in the marketplace. Many printer drivers implement a "Draft", "Fast" or "Economy" printing mode that allow users to make preliminary, or draft, printouts of documents. Printers operating in these modes typically have higher throughput and use reduced amounts of printing material such as ink or toner. When the users are satisfied with the result of the effect of the chosen feature on the draft printouts made, they can proceed to make the actual printouts. However, in using this solution, users not only waste time, but also resources, which also include printing media like paper.

Users may also, while using some printer drivers, print a document to a print file, instead of to the printer, in a particular format and subsequently use a special viewing application program to preview the desired printout. When a user prints a document to a print file in, for example, the Postscript format, the user can subsequently use the Acrobat Read application program by Adobe Systems Incorporated to preview the desired printout of the document on the screen of the computing system. The problem with this solution is that many printers implement their own proprietary languages, so that only specific special viewing application programs would be useable for previewing the desired printout of the document. In any case, this solution entails users to perform a two-step process and thus is time-consuming and inconvenient to the users.

Accordingly, it is an object of the present invention to provide a system for providing a preview of the printout produced by a printer device connected to a host computer.

A computing system connected to a printer device is provided with a system for allowing a user to preview the printout from the printer device. Such a system includes a printer driver and a display that is part of the computing system. The computing system also contains an application program that generates printing information for a document. The printer driver then performs a series of steps of operation on this printing information, including processing it according to a layout for sheet media on which the printout will be formed. This operation also includes processing the printing information into a form useable by the printer device for generating the printout. In addition, the printer driver is capable of processing the printing information into images of the desired printout that the user can view on the display. The user is thus able to preview the desired printout, and any effect that the layout processing may have on it.

The invention will be better understood with reference to the drawings, in which:
Figure 1 shows the effect of a special printer feature, Handout 4X4, on a document using the prior art printer driver for the HP Deskjet 1100C Printer;
Figure 2 shows a block diagram of a system for providing a preview of the printout produced by a printer device connected to a host computer according to a preferred embodiment of the invention;
Figure 3 shows a print preview of a document using the prior art application program Netscape Navigator from the Netscape Communications Corporation;
Figure 4A shows the effect of a special printer feature, Handout 2X2, on a document using the printer driver in Figure 2;
Figure 4B shows the effect of a special printer feature, Billboard 2X2, on a document using the printer driver in Figure 2;
Figure 5 shows a print preview of the document in Figure 3 using a printer driver from the print preview system in Figure 2 when a special printer feature, Handout-2, is selected;
Figure 6 shows a flow diagram of the print preview system in Figure 2 further detailing the steps of operation with which the system performs to provide a preview of the desired printout; and
Figure 7 shows a flow diagram of the printer driver in Figure 6 further including the printing information.

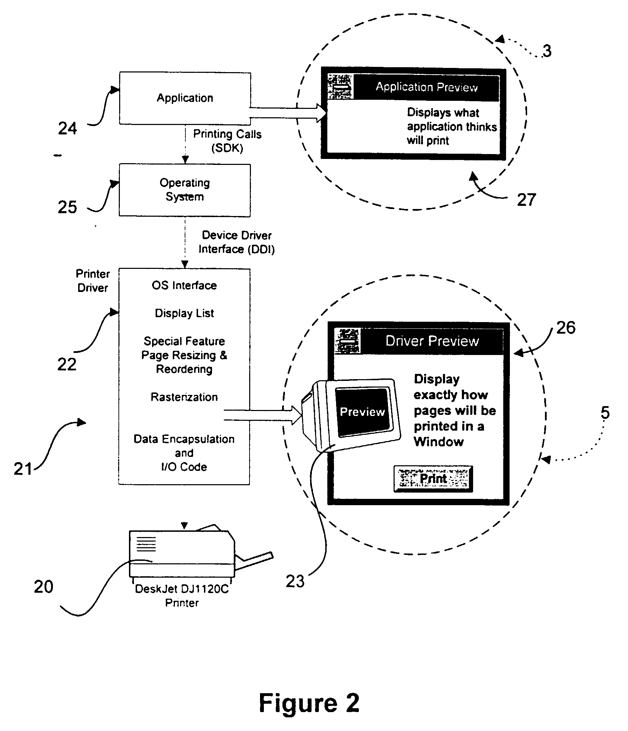

Reference is first made to Figure 2 to describe printer 20, for example, an inkjet printer, connected, either directly or via a network, to a computer (not shown) which is provided with a print preview system 21 according to a preferred embodiment of the invention. The print preview system 21 is made up of a printer driver 22 and a computer display 23. An application program 24 capable of generating a set of printing information, or print job, first makes printing calls to the operating system (OS) 25, for example and not as a limitation, a Windows OS. The printing calls made by the application program 24 subsequently results in the print job being sent to the Windows OS 25, which is a process well known to those skilled in the art. The Windows OS 25 then passes the printing job to the printer driver 22 for processing, including processing it according to a previously selected special printer feature. After processing, a printer driver preview user interface (UI) 26 is presented on the display 23. Such a printer driver preview UI 26 provides a means to preview the print job after the printer driver 22 has processed it according to a previously selected special printer feature. This preview represents the desired printout at the printer 20. This print preview means differs from an application program preview UI 27 typically provided by the application program 24. The application program preview UI 27 provides a preview of the print job before the printer driver 22 has processed it.

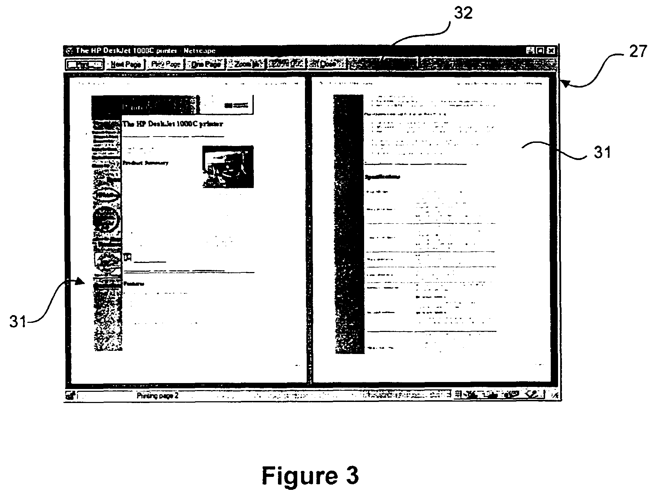

The functional aspect of the print preview system 21 will now be described in more detail with reference to Figures 3 to 5. As mentioned in the foregoing, the application program 24 generates a print job that is subsequently sent to the Windows OS 25 via printing calls. However, before these printing calls can be made, a user is required to select a document, or parts of a document, of which the user wishes to make a printout. A print process is then initiated, whereby such a process is well known to users of common application programs capable of generating print jobs. Such a print process includes the actuation of a print icon or selection of a print option from a menu. In the event that such common application programs provide print preview means, as does the application program 24 described above, the user can also choose to preview the print job. When activated, the application program preview UI 27, as shown in Figure 3, presents two-sheet printout images 31 within a window 32 to the user. These printout images 31 are shown in a form as perceived by the application program 24 to be representative of the desired printout at the printer 20.

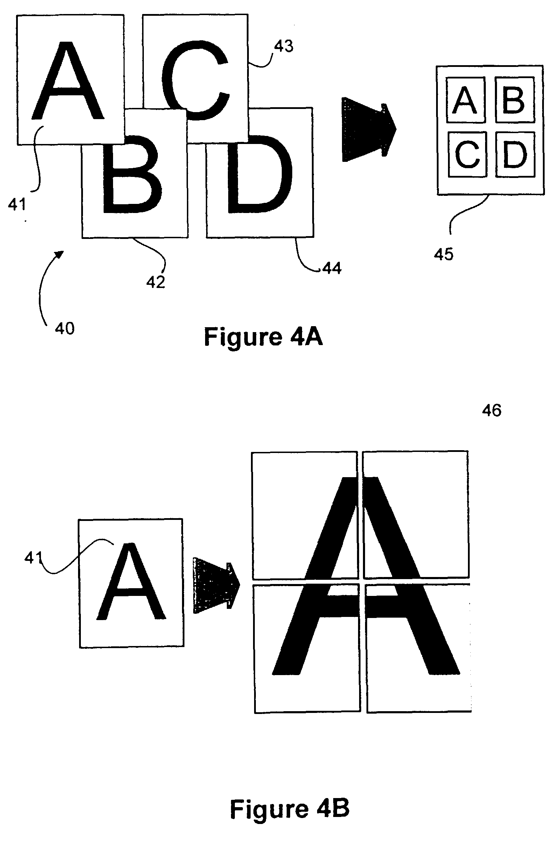

When the printer 20 is available to service the request by the application program 24 to print the selected document, the Windows OS 25 passes the print job to the printer driver 22. The availability of the printer 20 service is usually contingent on the number of print jobs previously sent to the printer 20. The printer driver 22 then processes the print job, and depending on whether a special printer feature had been selected earlier by the user, the print job will be processed accordingly. For example, the user may choose the special printer feature, Handout 2X2, which causes the printer driver 22 to process a print job for a document 40 consisting of pages A 41, B 42, C 43 and D 44, as shown in Figure 4A, into a print job for a single-sheet printout 45 layout. Alternatively, the user may choose the special printer feature, Billboard 2X2, which causes the printer driver 22 to process the print job for the page A 41, as shown in Figure 4B, into a print job for a four-sheet printout 46 layout.

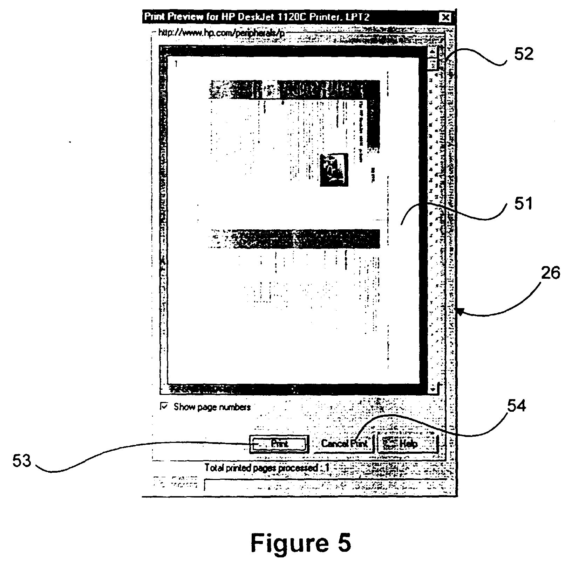

After the printer driver 22 processes the print job, whether according to a selected special printer feature or not, the user is then provided with the option to preview the print job for the desired printout. If the user opts to preview, the printer driver preview UI 26 then appears on the display 23. As shown in Figure 5, the user has selected a special printer feature, Handout-2, for the desired printout. The two-sheet printout images 31 previously described are now presented as a single-sheet printout image 51 within a preview window 52 according to the Handout-2 feature. Thus whenever the printer driver preview UI 26 is activated, it always provides the user with a quick visual representation of the actual printout, taking into account the effect of the selected printer driver features. The user can also move back and forth between sheets of the desired printout, in the event that there is more than one sheet of the desired printout. If the user is satisfied with what is presented, the user may click a PRINT icon 53 to proceed to send the processed print job to the inkjet printer 20 for producing an actual printout. Otherwise, the user may choose to actuate a CANCEL icon 54 to discontinue the printing process at this point.

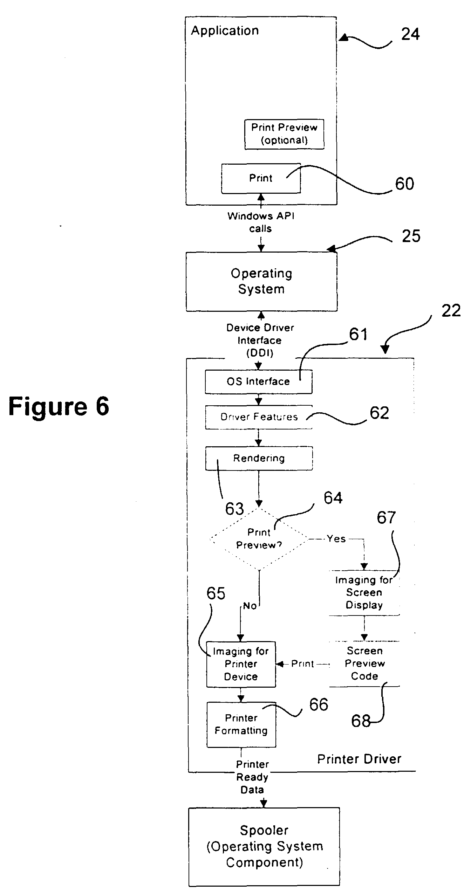

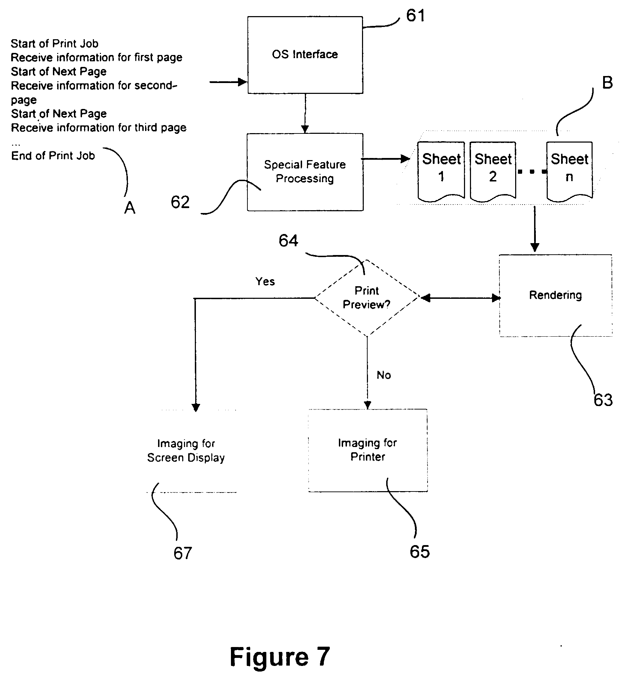

For a better understanding of the operational aspect of the print preview system 21, a more detailed description of the steps of operation performed by the print preview system 21 when it processes the print job is provided with reference to Figure 6. In particular, the printer driver 22 will also be described in more detail with reference to the flow diagram in Figure 7. As shown in Figure 6, the application program 24 generates the print job upon initiation by the user and makes printing calls in a Print step 60. The printing job then passes through the Windows OS 25 and is received by the printer driver 22 in an OS Interface step 61. The printer driver 22 typically receives the print information from the Windows OS 25 in a sequence shown in a print job "A" in Figure 7.

Depending on the type of special printer features selected by the user, "pages" of printing information within the print job "A", as sent from the application program 24 and the form of which is well known to those skilled in the art, are reordered into "sheets" of printing information in a Driver Features step 62. As an example, if the user selects the Handout 2x2 feature in Figure 4A, then the printer driver 22 will combine every four pages of printing information it receives into a single sheet of printing information. Alternatively, if the user selects the Billboard 2x2 feature in Figure 4B, then the printer driver 22 will split every page of printing information that it receives into four sheets of printing information.

Each sheet of printing information generated in the Driver Features step 62 is stored, as shown in a print job "B" in Figure 7, in the computer, preferably, in a high-level object description language close to the original form sent by the application program 24. Text, line segments and device-independent bitmaps are examples of such high-level object description language.

Each sheet of printing information of the print job "B" is then rendered in a Rendering step 63. Rendering, or rasterization, is the process of converting an object representation into a device-dependent bitmap representation and is well known to those skilled in the art. Therefore, in Rendering step 63, the text, line segments and device-independent bitmaps of each sheet of printing information is converted into a bitmap according to the printer 20 resolution, and of which a format is specific to the printer 20.

Having rendered the print job in the Rendering step 63, the control logic in a Print Preview? step 64 takes over and causes the printer driver 22 to present the user with an opportunity to preview the print job after it is reordered and rendered. If the user chooses to preview, the printer driver 22 will proceed to perform an Imaging for Screen Display step 67. Otherwise, the printer driver 22 will perform an Imaging for Printer Device step 65 and continue to process the print job for producing the actual printout at the printer 20.

Imaging is the process of taking a bitmap and converting it into a form suitable for the target device, which in this case is the printer 20. In the Imaging for Printer Device step 65, such a process typically includes half-toning and color processing (both processes are well known to those skilled in the art), all of which are specific to the inks used in the printer 20 and the sheet media earlier selected by the user. In general, this step also includes other forms of processing on the print job necessary for producing a high quality actual printout from the printer 20. The print job is subsequently formatted for suitable transmission, either via the network or the dedicated connection, to the printer 20 in a Printer Formatting step 66, whereby processes including encapsulation of the print job for a specific transmission operation takes place.

In the event that the user chooses to preview the print job at the Print Preview? step 64, the printer driver 22 will proceed to perform the Imaging for Screen Display step 67. As mentioned in the foregoing, each sheet of printing information generated in the Driver Features step 62 is stored in the computer in a high-level object description language.

The printer driver 22 employs an imaging algorithm in the Imaging for Screen Display step 67, which takes into account the display 23 bit depth and resolution. In addition, the imaging algorithm will also maximize the use of the display 23 screen area in order to present as much detail in the printer driver preview UI 26 as possible.

The imaging algorithm begins by having the printer driver 22 determine the display 23 screen size in terms of the number of pixels displayable vertically and horizontally. Having determined this screen size, the printer driver 22 further determines the size of the portion of the display 23 screen that can be used to present the preview window 52, by using a predetermined percentage, at a fixed aspect ratio, of the screen size. Then the printer driver 22 determines the aspect ratio of the selected sheet media size on which the actual printout will be made, which is to be previewed. Based on the selected sheet media aspect ratio and the size of the preview window 52, the printer driver 22 subsequently determines a scale-down factor, since the printer 20 is typically at a higher resolution than the display 23 screen.

This scale-down factor is then used to scale down the rendered print job resolution, which is also the printer 20 resolution, to the display 23 screen resolution. In order to minimize information loss during the scaling down process, the printer driver 22 employs a well-known averaging algorithm for both the horizontal and vertical planes of the preview window 52.

The rendered print job at this point is typically in a 24-bit RGB format. If the display 23 is set to a display mode with multiple bits per primary color, for example, to 16-bit, 24-bit or 32-bit depths, then presenting the preview windows 52 on the display 23 screen is simply a matter of converting between different bit formats. However, if the display is palletized, for example, to 8-bit indexed, then the display palette for display 23 may need to be programmed. A half-toning algorithm is not used for presenting the preview window 52; an algorithm to snap to primary or available colors is used instead. The above processes of display palette programming, half-toning and snapping of colors are well known to those skilled in the art.

If the printer driver 22 takes significant time to render and image the print job in the Rendering step 63 and the Imaging for Screen Display step 67 respectively, the printer driver 22 will image every sheet of printing information into a disk-based file, or other kinds of cache memory. This will allow background processing of subsequent sheets of printing information to continue while the user is previewing a certain sheet of printing information. It also allows for quick display of a previously viewed sheet.

The preferred embodiment can be modified in many ways. For example, the printer driver preview UI may be provided with functionality to allow the users to select or change special printer features. This functionality is useful because the user may decide to change the selected special printer feature once after previewing the desired printout. In another example, the printer driver preview UI may also provide a progress bar if the rendering and imaging for screen display processes will take some time so that the users may be kept apprised of the status.

## Claims

1. A method for enabling a printer drive in a host computer to provide a user with a preview of the printout of a printer device (20) using sheet media, the printer device being connected to the host computer having a display and at least one application program capable of generating a set of printing information for a document having at least one page, comprising the steps of:
correlating the printing information for disposing the at least one page of document on pre-selected sheet media according to a pre-selected layout;
after correlating the printing information, imaging (65) the printing information according to a printer device specific form so that the printing information is useable by the printer device for generating the printout;
after correlating the printing information, converting (67) the printing information into a plurality of preview images corresponding to the pre-selected sheet media on which the at least one page of document is disposed according to the pre-selected layout; and
presenting at least one of the preview images to the user using the display (23).

2. A method for a user to preview the sheet media printout from a printer device (20) for a document having at least one page, the printer device being connected to a host computer having a display and a plurality of application programs, comprising the steps of:
enabling at least one (24) of the plurality of application programs with functionality to generate a set of printing information for the document having at least one page of information;
enabling one of the plurality of application programs with functionality to receive and format the printing information for transmission to the printer device for producing the printout, further including the steps of;
receiving the printing information,
correlating the printing information for disposing the at least one page of document on pre-selected sheet media according to a pre-selected layout,
after correlating the printing information, imaging (65) the printing information according to a printer device specific form so that the printing information can be used by the printer device to produce the printout,
after correlation the printing information, converting (67) the printing information into a plurality of preview images corresponding to the pre-selected sheet media on which the at least one page of document is disposed according to the pre-selected layout, and
presenting at least one of the preview images to the user using the display (23).

3. The method as in claim 1 or 2 further comprises the steps of:
after correlating but before imaging the printing information, rasterizing the printing information according to a printer device specific resolution.

4. The method as in claim 3, further comprising the steps of:
after imaging the printing information, formatting the printing information for transmission to the printer device.

5. The method as in claim 1 or 2, wherein the step of presenting the at least one of the preview images further includes the steps of:
presenting a preview image that fits the pre-selected sheet media, on which the at least one page of document is disposed according to the pre-selected layout, onto the display.

6. The method as in claim 1 or 2 wherein the step of imaging the printing information further includes the steps of:
half-toning and color correcting the printing information according to a printer device specific form so that the printing information is useable by the printer device for generating the printout.

7. The method as in claim 3, wherein the step of converting the printing information further includes the steps of:
scaling the printing information in a printer device specific resolution into a resolution suitable for providing a plurality of preview images corresponding to the pre-selected sheet media on which the at least one page of document is disposed according to the pre-selected layout for subsequent presentation on the display.

8. A system for a user to preview the sheet media printout from a printer device (20) for a document having at least one page, the printer device being connected to a host computer having a display and a plurality of application programs, the system comprising:
means for enabling at least one (24) of the plurality of application programs with functionality to generate a set of printing information for the document having at least one page of information;
means for enabling one of the plurality of application programs with functionality to receive and format the printing information for transmission to the printer device for producing the printout, further including:
means for receiving the printing information,
means for correlating the printing information for disposing the at least one page of document on pre-selected sheet media according to a pre-selected layout,
means for imaging the correlated printing information according to a printer device specific form so that the printing information can be used by the printer device to produce the printout.
means for converting the correlated printing information into a plurality of preview images corresponding to the pre-selected sheet media on which the at least one page of document is disposed according to the pre-selected layout, and
means for presenting at least one of the preview images to the user using the display.

9. The system as in claim 8, further comprising means for rasterizing the correlated printing information according to a printer device specific resolution.

10. The system as in claim 9, wherein the means for converting the printing information further includes means for scaling the printing information in a printer device specific resolution into a resolution suitable for providing a plurality of preview images corresponding to the pre-selected sheet media on which the at least one page of document is disposed according to the pre-selected layout for subsequent presentation on the display.
